# EUROPÄISCHE PATENTANMELDUNG

(11) **EP 4 737 758 A1**
(43) Veröffentlichungstag der Anmeldung: **06.05.2026**
(21) Anmeldenummer: 24209870.5
(22) Anmeldetag: 30.10.2024
(51) Int. Cl.: F16F 9/32, F16F 9/52

(54) **STOSSDÄMPFER**

(71) Anmelder: Driveman GmbH, 58339 Breckerfeld (DE)
(72) Erfinder: Schnippering, Axel, 58339 Breckerfeld (DE); Wiegand, Andreas, 58579 Dahlerbrück (DE)
(74) Vertreter: Patentanwälte Dörner & Kötter PartG mbB

(57) **Zusammenfassung**

Die Erfindung betrifft einen Stoßdämpfer, umfassend einen mit einem Fluid befüllten Zylinder (1) und eine in diesem geführten Kolbenstange (4), wobei die Kolbenstange (4) in den Zylinder (1) hinein oder durch ihn hindurchgeführt ist und mit wenigstens einem Kolben (5) versehen ist, wobei in dem Zylinder (1) den wenigstens einen Kolben (5) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (5), wodurch zwischen dem wenigstens einen Kolben (5) und der wenigstens einen Dämpferhülse (2) ein Ringspalt (55) gebildet ist und zwischen der wenigstens einen Dämpferhülse (2) und dem Zylinder (1) ein Mantelspalt (12) gebildet ist, dadurch gekennzeichnet, dass der wenigstens eine Kolben (5) diesen radial außen begrenzend eine Kolbenhülse (54) aufweist, die einen Raum begrenzt, in dem ein Dehnstoff (7) eingebracht ist.

## Beschreibung

Die Erfindung betrifft einen Stoßdämpfer nach dem Oberbegriff des Patentanspruchs 1.

Stoßdämpfer kommen beispielsweise bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung oder auch Schwingungen der Räder auf die Reifenfederung zu dämpfen. Stoßdämpfer werden darüber hinaus in den unterschiedlichsten Bereichen eingesetzt, beispielsweise auch zur Schwingungsdämpfung von Maschinen oder Maschinenteilen, aber auch beispielweise im Möbelbau zum Dämpfen von Klappenbewegungen.

Bei Fahrzeugen liegt die primäre Aufgabe einer Feder innerhalb der Federung darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet.

Der Negativfederweg (Zugstufe) ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Hydrauliköl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens an.

Nachteilig an den vorbekannten hydraulischen Stoßdämpfern (die, wie oben ausgeführt, tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens.

Zur Behebung dieser Problematik wird in der DE 20 2023 102 485 U1 ein Stoßdämpfer vorgestellt, bei dem eine Beeinträchtigung der Stoßdämpfungswirkung einer angeordneten Federung in ihrem freischwingenden Mittelbereich vermieden ist. Hierzu ist in einem Zylinder eine Kolbenstange angeordnet, die durch diesen hindurchgeführt ist und die mit zwei beabstandet zueinander angeordneten Kolben versehen ist, in die umlaufend radial beabstandet zu der Kolbenstange Axialbohrungen eingebracht sind. An der jeweiligen Außenseite der Kolben ist jeweils eine Verschlussscheibe zum Verschließen der Axialbohrungen des zugeordneten Kolbens auf der Kolbenstange axial beweglich gelagert.

Die Zylinderinnenwand weist zumindest bereichsweise einen sich in Axialrichtung stetig ändernden Durchmesser auf, wodurch eine wegabhängige Dämpfung bewirkt ist, über die eine Minimierung der Schwingungsdämpfung im freischwingenden Mittelbereich einer Federung ermöglicht ist. Dieser Stoßdämpfer hat sich in der Praxis bewährt und ermöglicht erstmals eine wegabhängige Dämpfung mit einer weitgehend ungedämpften Nulllage.

Als vorteilhaft bei dem vorbekannten Schwingungsdämpfer hat sich weiterhin eine Ausgestaltung erwiesen, bei der die Zylinderinnenwand durch die Innenwand einer in den Zylinder eingebrachten Dämpferhülse gebildet ist, deren Außendurchmesser kleiner als der Innendurchmesser des Zylinderrohrs ist. Hierdurch kann sich die Dämpferhülse bei einem Druckanstieg im Zylinder erweitern, wodurch der Ringspalt zwischen Dämpferhülse und Kolben vergrößert ist. Durch den so vergrößerten Ringspalt kann das Fluid besser abfließen. Bei geeigneter Elastizität des Materials der Dämpferhülse verliert der Stoßdämpfer seine Abhängigkeit von der Geschwindigkeit und nimmt nahezu eine reine Wegabhängigkeit an.

Beim Einsatz eines solchen Stoßdämpfers hat sich jedoch gezeigt, dass bei hoher Belastung des Stoßdämpfers sowie bei unterschiedlichen Temperaturbedingungen Abweichungen des gewünschten Dämpfungsverhaltens auftreten können. Durch eine im Betrieb des Dämpfers entstehende Wärmezunahme sinkt die Viskosität des Hydrauliköls, wodurch die Dämpferleistung reduziert wird.

Hier will die Erfindung Abhilfe schaffen. Der Erfindung liegt die Aufgabe zu Grunde einen Stoßdämpfer bereitzustellen, bei dem auch bei hoher Arbeitsleistung sowie bei unterschiedlichen Temperaturen ein definiertes Dämpfungsverhalten erzielbar ist. Gemäß der Erfindung wird diese Aufgabe durch einen Stoßdämpfer mit den Merkmalen des kennzeichnenden Teils des Patentanspruchs 1 gelöst.

Mit der Erfindung ist einen Stoßdämpfer bereitgestellt, bei dem auch bei hoher Arbeitsleistung sowie bei unterschiedlichen Temperaturen ein definiertes Dämpfungsverhalten erzielbar ist. Dadurch, dass der wenigstens eine Kolben diesen radial außen begrenzend eine Kolbenhülse aufweist, die einen Raum begrenzt, in dem ein Dehnstoff eingebracht ist, ist bei einem Temperaturanstieg eine Ausdehnung der Kolbenhülse bewirkt, wodurch der Kolbenspalt reduziert wird. Hierdurch wird der Fließwiderstand bei abnehmender Viskosität des in dem Zylinderraum befindlichen Hydrauliköls erhöht, wodurch bei Temperaturschwankungen ein stabiles Dämpfungsverhalten erzielt ist.

Unter dem Begriff "Zylinderraum" ist vorliegend der von dem wenigstens einen Kolben befahrbare und mit Hydrauliköl befüllte Innenraum zu verstehen, der vorliegend durch die wenigstens eine Dämpferhülse begrenzt ist.

In Weiterbildung der Erfindung umfasst der wenigstens eine Kolben eine Verbindungshülse, die axial mit zwei gegenüberliegend angeordneten Verschlussscheiben versehen ist, zwischen denen die Kolbenhülse angeordnet ist, wobei der Dehnstoff in einen zwischen der Verbindungshülse und der Kolbenhülse begrenzten Raum eingebracht ist. Hierdurch ist eine definierte Ausdehnung der Kolbenhülse bewirkt.

In Ausgestaltung der Erfindung sind die Verschlussscheiben an ihrer der Kolbenhülse abgewandten Seite mit einer Phase versehen. Hierdurch ist da Durchflussverhalten des Dämpferöls in den Kolbenspalt verbessert.

In weiterer Ausgestaltung der Erfindung ist der Dehnstoff Terpentinöl, Wachs, Öl oder (Hart-)Paraffin. Diese Stoffe zeichnen sich dadurch aus, dass sie bei Temperaturänderungen eine signifikante Volumenänderung aufweisen.

In weiterer Ausgestaltung der Erfindung ist die Kolbenhülse aus Kunststoff, insbesondere aus POM hergestellt. Dieser Kunststoff weist einen hohen Wärmeausdehnungskoeffizienten auf, wodurch das Ansprechverhalten der Ausdehnung des Kolbens bei Temperaturänderungen verbessert ist.

In Weiterbildung der Erfindung sind die Verbindungshülse und die Verschlussscheiben aus einem Metall hoher Wärmeleitfähigkeit, insbesondere aus Kupfer oder Aluminium oder deren Legierungen hergestellt. Hierdurch ist ein zügiger Wärmeübergang vom Hydrauliköl an den Dehnstoff erzielt.

In Ausgestaltung der Erfindung ist die wenigstens eine Dämpferhülse zwischen zwei Dichtungspaketen gehalten, die aus einem Metall hoher Wärmeleitfähigkeit, insbesondere aus Kupfer oder Aluminium oder deren Legierungen hergestellt sind. Hierdurch ist eine gute Wärmeableitung vom Dämpferöl nach außen erzielt, wodurch dessen Abkühlung bewirkt ist, was wiederum zu einem verringerten Abfall der Viskosität des Dämpferöls führt.

In weiterer Ausgestaltung der Erfindung ist wenigstens eine der wenigstens einen Dämpferhülse aus Kunststoff, vorzugsweise aus einem thermoplastischen Kunststoff hergestellt. Durch die Elastizität des Kunststoffes ist eine druckabhängige Vergrößerung des Ringspaltes zwischen Kolben und Dämpferhülse einstellbar.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Dabei kommen gleichen Teilen gleiche Bezugsziffern zu. Es zeigen:
- Figur 1:: die schematische Darstellung eines Stoßdämpfers im Längsschnitt;

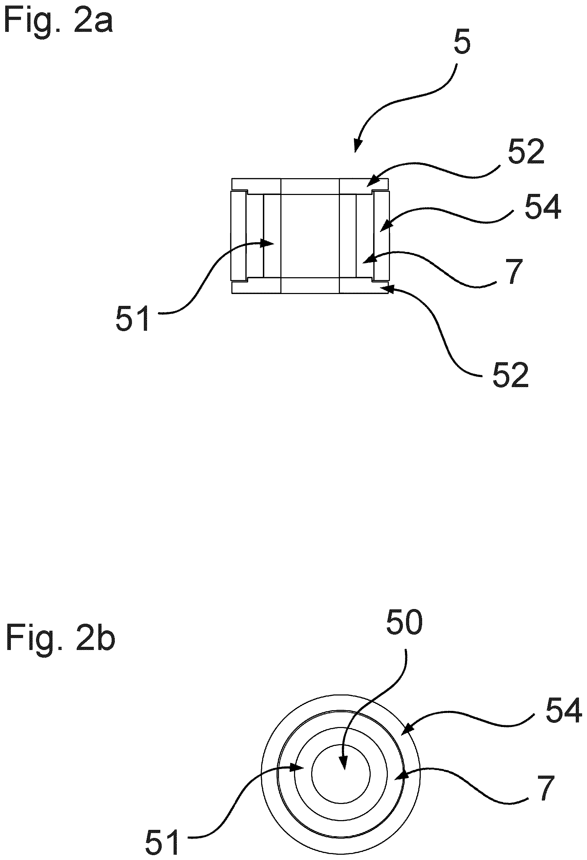

- Figur 2:: die schematische Darstellung des Kolbens des Stoßdämpfers aus Figur 1
a) im Längsschnitt;
b) im Querschnitt;

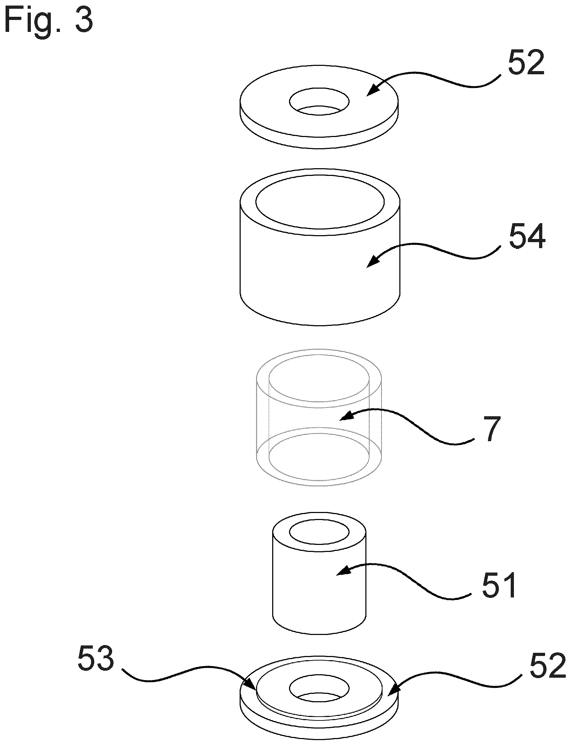

- Figur 3:: den Kolben aus Figur 2 in einer Explosionsdarstellung.
a) in einer Seitenansicht;
b) in einer transparenten Darstellung;

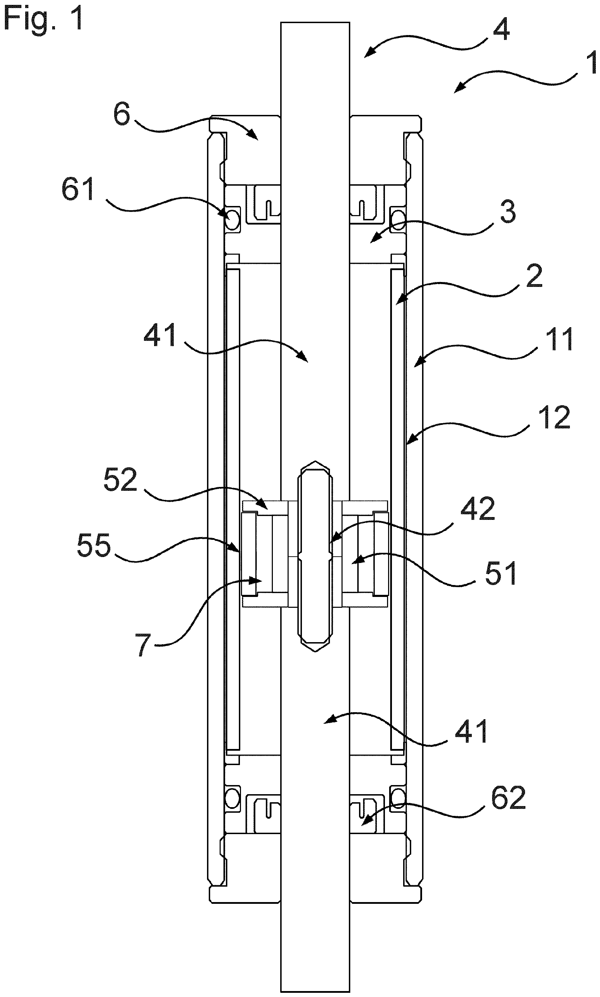

Der als Ausführungsbeispiel gemäß Figur 1 gewählte Stoßdämpfer umfasst einen mit einem Fluid, vorliegend einem Hydrauliköl HVLP 32, gefüllten Zylinder 1, in den eine Dämpferhülse 2 eingebracht ist, die zwischen zwei Dichtungspaketen 3 angeordnet ist, durch die eine Kolbenstange 4 verschiebbar geführt ist. Auf der Kolbenstange 4 ist ein Kolben 5 angeordnet.

Der Zylinder 1 umfasst ein Zylinderrohr 11, das an beiden Enden jeweils mit einem Verschlussstück 6 verschlossen ist, an die sich das Dichtungspaket 3 anschließt, das über einen O-Ring 61 gegenüber dem Zylinderrohr 11 abgedichtet ist und das einen hydraulischen Dichtring 62 aufnimmt, über den es gegenüber der axial beweglichen Kolbenstange 3 abgedichtet ist. Das Dichtungspaket 3 ist aus einem Metall hoher Wärmeleitfähigkeit, vorliegend einer Aluminiumlegierung hergestellt. Die Dichtungspakete 3 sind über die Verschlussstücke 6, an denen sie anliegen, axial in dem Zylinderrohr 11 fixiert.

Die Dämpferhülse 2 ist im Ausführungsbeispiel aus einem thermoplastischen Kunststoff, vorliegend Polyamid hergestellt. Der Außendurchmesser der Dämpferhülse 2 ist etwa vier Prozent geringer gegenüber dem Innendurchmesser des Zylinderrohres 11, wodurch zwischen dem Zylinderrohr 11 und der Dämpferhülse 2 ein Mantelspalt 12 gebildet ist. Die Dämpferhülse 2 ist so zwischen den Dichtungspaketen 3 axial fixiert schwimmend in dem Zylinderrohr 11 gehalten.

Die Kolbenstange 4 umfasst zwei Kolbenstangenstücke 41, die über ein gegenüber diesen durchmesserreduziertes Verbindungszylinderstück 42 miteinander verschraubt sind. Auf das Verbindungszylinderstück 42 ist der Kolben 5 aufgebracht, der hierzu einen axialen zylindrischen Durchgang 50 aufweist, durch den das Verbindungszylinderstück 42 geführt ist. Der Kolben 5 ist zwischen den zwei Kolbenstangenstücken 41 axial gehalten.

Der Kolben 5 umfasst eine Verbindungshülse 51, die beidseitig jeweils mit einer diese radial überragenden, ringförmig ausgebildeten Verschlussscheibe 52 versehen ist, wodurch ein spulenartiger Körper gebildet ist. Die Verbindungshülse 51 und die beiden Verschlussscheiben 52 sind aus einem Metall hoher Wärmeleitfähigkeit, vorliegend einer Aluminiumlegierung ausgebildet.

Die Verschlussscheiben 52 sind identisch ausgebildet und weisen an ihren zueinander zugewandten Innenseiten einen Absatz 53 auf, an dem eine zwischen den Verschlussscheiben 52 angeordnete Kolbenhülse 54 angeordnet ist. Außen sind die Verschlussscheiben 52 an ihrer der Kolbenhülse abgewandten Seite mit einer - nicht dargestellten - umlaufenden Fase versehen. Die Kolbenhülse 54 ist im Ausführungsbeispiel aus einem Polyoxymethylen Copolymer (POM-C) hergestellt. Der von der Verbindungshülse 51, den Verschlussscheiben 52 und der Kolbenhülse 54 begrenzte Raum ist mit einem Dehnstoff 7 gefüllt, der im Ausbildungsbeispiel Hart-Paraffin ist.

Bei Bewegung der Kolbenstange 3 in Zugrichtung (Zugbelastung) oder in Druckrichtung (Druckbelastung) wird das in dem Zylinder 1 befindliche Hydrauliköl durch den Kolben 5 komprimiert und durch den zwischen der Kolbenhülse 54 des Kolbens 5 und der Innenwand der Dämpferhülse 2 gebildeten Ringspalt 55 hindurchgepresst. Durch die - nicht dargestellten - Fasen der Verschlussscheiben 52 ist das Einfließen des Hydrauliköls in den Ringspalt 55 unterstützt.

Bei einem Temperaturanstieg des Hydrauliköls nimmt dessen Viskosität ab. Die Wärme des Hydrauliköls wird auf die Kolbenhülse 54 und über das wärmeleitende Material der Verschlussscheiben 52 auf den Dehnstoff 7 übertragen, dessen Volumen sich ausdehnt. Hierdurch wird der Ringspalt 55 verkleinert, wodurch der durch aufgrund der niedrigeren Viskosität des Hydrauliköls niedrigere Durchflusswiderstand wieder erhöht wird.

## Patentansprüche

1. Stoßdämpfer, umfassend einen mit einem Fluid befüllten Zylinder (1) und eine in diesem geführten Kolbenstange (4), wobei die Kolbenstange (4) in den Zylinder (1) hinein oder durch ihn hindurchgeführt ist und mit wenigstens einem Kolben (5) versehen ist, wobei in dem Zylinder (1) den wenigstens einen Kolben (5) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (5), wodurch zwischen dem wenigstens einen Kolben (5) und der wenigstens einen Dämpferhülse (2) ein Ringspalt (55) gebildet ist und zwischen der wenigstens einen Dämpferhülse (2) und dem Zylinder (1) ein Mantelspalt (12) gebildet ist, **dadurch gekennzeichnet, dass** der wenigstens eine Kolben (5) diesen radial außen begrenzend eine Kolbenhülse (54) aufweist, die einen Raum begrenzt, in dem ein Dehnstoff (7) eingebracht ist.

2. Stoßdämpfer nach Anspruch 1, **dadurch gekennzeichnet, dass** der wenigstens eine Kolben (5) eine Verbindungshülse (51) umfasst, die axial mit zwei gegenüberliegend angeordneten Verschlussscheiben (52) versehen ist, zwischen denen die Kolbenhülse (54) angeordnet ist, wobei der Dehnstoff (7) in einen zwischen der Verbindungshülse (51) und der Kolbenhülse (54) begrenzten Raum eingebracht ist.

3. Stoßdämpfer nach Anspruch 2, **dadurch gekennzeichnet, dass** die Verschlussscheiben (52) an ihrer der Kolbenhülse (54) abgewandten Seite mit einer Fase versehen sind.

4. Stoßdämpfer nach einem der vorgenannten Ansprüche, **dadurch gekennzeichnet, dass** der Dehnstoff (7) Terpentinöl, Wachs, Öl oder Paraffin ist.

5. Stoßdämpfer nach einem der vorgenannten Ansprüche, **dadurch gekennzeichnet, dass** die Kolbenhülse (54) aus Kunststoff, insbesondere aus POM hergestellt ist.

6. Stoßdämpfer nach einem der vorgenannten Ansprüche 2 bis 5, **dadurch gekennzeichnet, dass** die Verbindungshülse (51) und die Verschlussscheiben (52) aus einem Metall hoher Wärmeleitfähigkeit, insbesondere aus Kupfer oder Aluminium oder deren Legierungen hergestellt sind.

7. Stoßdämpfer nach einem der vorgenannten Ansprüche, **dadurch gekennzeichnet, dass** die wenigstens eine Dämpferhülse (2) zwischen zwei Dichtungspaketen (3) gehalten ist, die aus einem Metall hoher Wärmeleitfähigkeit, insbesondere aus Kupfer oder Aluminium oder deren Legierungen hergestellt sind.

8. Stoßdämpfer nach einem der vorgenannten Ansprüche, **dadurch gekennzeichnet, dass** wenigstens eine der wenigstens einen Dämpferhülse (2) aus Kunststoff, vorzugsweise aus einem thermoplastischen Kunststoff hergestellt ist.
